(19) Europäisches Patentamt
European Patent Office
Office européen des brevets

(11) Veröffentlichungsnummer: **0 136 529**
**B1**

(12) # EUROPÄISCHE PATENTSCHRIFT

(45) Veröffentlichungstag der Patentschrift: **11.07.90**

(51) Int. Cl.[5]: **C 08 G 73/10**, C 08 G 73/14

(21) Anmeldenummer: **84110173.6**

(22) Anmeldetag: **27.08.84**

(54) **Aliphatisch-aromatische Polyamidimide.**

(30) Priorität: **06.09.83 DE 3332032**

(43) Veröffentlichungstag der Anmeldung:
**10.04.85 Patentblatt 85/15**

(45) Bekanntmachung des Hinweises auf die Patenterteilung:
**11.07.90 Patentblatt 90/28**

(84) Benannte Vertragsstaaten:
**CH DE FR GB IT LI**

(56) Entgegenhaltungen:
**EP-A-0 104 417**
**DE-A-2 542 706**
**DE-A-2 947 117**
**DE-A-3 240 934**
**DE-B-1 770 202**
**DE-B-1 956 512**
**FR-A-2 503 171**

(73) Patentinhaber: **BAYER AG**
**D-5090 Leverkusen 1 Bayerwerk (DE)**

(72) Erfinder: **Zecher, Wilfried, Dr.**
**Treptower Strasse 6**
**D-5090 Leverkusen 1 (DE)**
Erfinder: **Dünwald, Willi, Dr.**
**Geschwister-Scholl-Strasse 16**
**D-5090 Leverkusen 1 (DE)**
Erfinder: **Merten, Rudolf, Dr.**
**Berta-von-Suttner-Strasse 55**
**D-5090 Leverkusen 1 (DE)**
Erfinder: **Reinking, Klaus, Dr.**
**Robert-Stolz-Strasse 16 b**
**D-5632 Wermelskirchen 1 (DE)**

**EP 0 136 529 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft neue spezielle aliphatisch-aromatische Polyamidimide, die zur Verwendung als trübungsfreie Elektroisolierlacke und Duroplaste geeignet sind.

Aliphatisch-aromatische Polyamidimide werden z.B. durch Umsetzung von Trimellitsäureanhydrid mit Polyisocyanaten und Lactamen oder aliphat. Polyamiden erhalten (DBP 1770202 u. 1956512) und finden insbesondere als temperaturbeständige Elektroisolierlacke Verwendung. Ein Nachteil dieser Polyamidimide besteht darin, daß in höherkonzentrierten Lösungen und Schmelzen dieser Harze bei Temperaturen zwischen 50°C und 200°C, insbesondere bei Temperaturen um 150°C, schwerlösliche Trübungen und Verquallungen entstehen, die die Herstellung höherkonzentrierter Harze und z.B. deren Applikation als "High Solids" erschweren oder ausschließen.

Es wurde nun gefunden, daß man klare Polyamidimid-Harze erhält, die diese Nachteile nicht aufweisen, wenn bei der Umsetzung von Trimellitsäureanhydrid, Lactamen oder aliphatischen Polyamiden und Polyisocyanaten zu Polyamidimiden im Bereich von 0°C bis 400°C, vorzugsweise 50 bis 350°C, als Polyisocyanate Gemische aus 98—40% 4,4'-Diisocyanato-diphenylmethan und 2—60% 2,4- oder 2,6-Toluylendiisocyanate oder deren Gemische, vorzugsweise 90—50% 4,4'-Diisocyanato-diphenylmethan und 10—50% Toluylendiisocyanate, eingesetzt werden.

Die Eigenschaften der erfindungsgemäßen Polyamidimide sind als überraschend zu bezeichnen, da Toluylendiisocyanate unter den vorgegebenen Bedingungen nur spröde Lackfilme ergeben, während bei Polyamidimiden auf der Basis von 4,4'-Diisocyanato-diphenylmethan in phenolischen Lösungen im technisch interessanten Bereich von 50—90 Gewichtsprozenten Festgehalt bei Temperaturen von 50°C bis 200°C, insbesondere bei Temperaturen um 150°C, die bei der technischen Herstellung dieser Harze unvermeidbar sind, zum Teil irreversible Trübungen und Verquallungen auftreten. Hingegen bleiben Harze und Lösungen aus den erfindungsgemäßen Polyisocyanat-Gemischen im kritischen Konzentrations- und Temperatur-Bereich über Zeiträume von mehreren Stunden klar und verarbeitungsfähig, wodurch eine problemlose Herstellung auch im technischen Maßstab bei den dort auftretenden erhöhten Verweilzeiten ermöglicht wird, ohne daß ein merklicher Abfall der Produkteigenschaften, z.B. bei den Lackfilmen der Elastizität, Erweichungstemperaturen und Abreibfestigkeit, zu beobachten wäre.

Ein weiterer Vorteil der Polyamidimid-Harze aus den erfindungsgemäßen Polyisocyanat-Gemischen liegt in der Möglichkeit zur Applikation als "High Solids" und hochkonzentrierte Schmelzen, die ebenfalls die Beständigkeit dieser Systeme bei erhöhten Temperaturen und Konzentrationen zur Voraussetzung haben.

Als erfindungsgemazäßes Säureanhydrid wird Trimellitsäureanhydrid, als erfindungsgemaße Lactame die in DBP 1770202 beschreibenen Lactame, bevorzugt Verbindungen der allgemeinen Formel

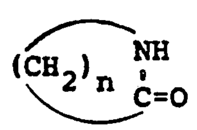 ,

in der n eine ganze Zahl von 2—20 bedeutet, besonders bevorzugt Caprolactam eingesetzt.

Als Polyamide eignen sich für das vorliegende Verfahren alle Polyamide, die durch Polykondensation von Dicarbonsäuren oder deren Derivaten mit Diaminen oder Aminocarbonsäuren und ihren Derivaten, wie, z.B. Lactamen, erhalten werden und wie sie z.B. in DBP 1956512 verwendet werden.

Erfindungsgemäß werden Polyamide der Formeln (Ia) und (Ib)

$$—[(CH_2)_n—CONH]— \qquad (Ia),$$

in welcher

n für eine ganze Zahl von 2 bis 20 steht, und

$$—[CO—(CH_2)_x—CONH—(CH_2)_y—NH] \qquad (Ib),$$

in welcher

x für eine ganze Zahl von 0 bis 18 und

y für eine ganze Zahl von 2 bis 18

steht, verwendet.

Vorzugsweise seien die Polyamide mit folgenden weiderkehrenden Struktureinheiten genannt:

$$(—[CH_2]_2—CO—NH—)\ (—[CH_2]_5—CO—NH—)\ (—[CH_2]_{11}—CO—NH—)$$
$$(—CO—[CH_2]_4—CO—NH—[CH_2]_6—NH—)\ (—CO—[CH_2]_8—CO—NH—[CH_2]_6—NH—)$$

Besonders bevorzugt werden Polycapronamid (Nylon 6) und Hexamethylenadipamid (Nylon 66) und deren Gemische untereinander eingesetzt. Sie können einzeln oder auch in Mischung mit Caprolactam eingesetzt werden.

Als erfindungsgemäße Isocyanate werden 4,4'-Disiocyanatodiphenylmethan, 2,4- und 2,6-Toluylendiisocyanat und deren technische Gemische wie z.B. das aus 80% 2,4- und 20% 2,6-Toluylendiisocyanat verwendet. Anstelle von 4,4'-Diisocyanato-dipenylmethan können auch bis zu einem Anteil von etwa 40% Polyphenylpolymethylenpolyisocyanate, wie sie durch Anilin-Formaldehyd-Kondensation und anschließende Phosgenierung erhalten werden, eingesetzt werden.

Die Isocyanate können in freier Form, ferner zum Teil oder auch vollständig in Form ihrer beim Umsatz mit reaktiven Wasserstoff enthaltenden Verbindungen zugänglichen und unter den Reaktionsbedingungen als Abspalter reagierenden Derivate eingesetzt werden.

Vorzugsweise werden als Abspalter die aus Lactamen, z.B. Caprolactam und Pyrrolidon, zugänglichen Acylharnstoffe und die aus aliphatischen und aromatischen Mono- und Polyhydroxy-Verbindungen erhaltenen Carbamidester verwendet.

Als Beispiele seien die Carbamidester aus Phenol, isomeren Kresolen, deren technischen Gemischen und ähnlichen aromatischen Hydroxyl-Verbindungen, aliphatische Monoalkohole wie Methanol, Butanol, Isopropanol, Diethylenglykolmonomethylether, Cyclohexanol, Benzylalkohol und aliphatische Di- oder Polyole wie Ethylenglykol und Trimethylolpropan aufgeführt.

Die verkappten Isocyanate können als solche eingesetzt oder erst in situ durch Umsetzung mit z.B. Lactamen, Phenolen oder Alkoholen erzeugt werden.

Erfindungsgemäß wird Trimellitsäureanhydrid als Anhydrid einer mehrbasischen Carbonsäure verwendet.

Die erfindungsgemäße Reaktion kann in Lösungsmitteln, die unter den Reaktionsbedingungen nicht reagieren oder nur lockere Additionsverbindungen bilden, ausgeführt werden.

Geeignete Lösungsmittel sind: (Halogen)-Kohlenwasserstoffe, Phenole, Alkohole, Ester, Lactone, Ketone, Ether, Nitrile, Amide, Sulfoxide und Sulfone, z.B. Xylole, o-Dichlorbenzol, Benzoesäuredialkylester, Phthalsäuredimethylester, Adipinsäuredialkylester, Butyrolacton, Caprolacton, Acetophenon, Cyclohexanon, Benzylalkohol, Ethylenglykol, Glykolmonomethyletheracetat, Diethylenglykolmonoethylether, Diethylenglykoldimethylether, Benzonitril und Dimethylsulfoxid oder deren Gemische. Als besonders geeignet haben sich Hydroxyaromaten wie Phenol, o,m,p-Kresol und deren Gemische erwiesen.

Zur Herstellung der erfindungsgemäßen Polyamidimide werden die Reaktionskomponenten mit oder ohne Lösungsmittel einige Minuten bis zu mehreren Stunden bei Temperaturen von 0—400°C, vorzugsweise von 50—350°C, gehalten. Der Verlauf der Reaktion läßt sich über die Gasentwicklung und die JR-Spekturen verfolgen.

Es ist zuweilen vorteilhaft, die Reaktion in mehreren Stufen durchzuführen oder die einzelnen Komponenten in unterschiedlicher Reihenfolge oder bei verschiedenen Temperaturen zuzugeben. So kann in einer ersten Stufe, z.B. in einem Lösungsmittel, ein Addukt oder Kondensationsprodukt hergestellt werden, das dann bei höheren Temperaturen unter Kettenverlängerung oder Vernetzung und gegebenenfalls unter Verdampfen des Lösungsmittels, in das hochmolekulare Reaktionsprodukt, z.B. einen Lackfilm, übergeführt wird. Bei der Verwendung als Lacke können diese auch als "High Solids" oder Schmelzen appliziert werden. Im allgemeinen ist es vorteilhaft, die Mengenverhältnisse zwischen den Reaktionskomponenten äquivalent zu den reaktionsfähigen Gruppen zu wählen, jedoch sind auch sehr weitgehende Abweichungen von diesen stöchiometrischen Verhältnissen möglich.

Die Reaktion zur Herstellung der erfindungsgemäßen Polyamidimide kann durch geeignete Katalysatoren beschleunigt werden, z.B. durch Amine wie Triethylamin, 1,4-Diazabicyclo-(2,2,2)-octan, Ethylmorpholin, 4-Dimethylamino- und Pyrrolidino-pyridin und 1- oder 2-Methylimidazol, durch anorganische und organische Metallverbindungen, insbesondere Verbindungen des Eisens, Bleis, Zinks, Zinns, Kupfers, Kobalts und Titans wie Eisen(III)chlorid, Kobaltacetat, Bleioxid, Bleiacetat, Zinnoctoat, Dibutylzinn-dilaurat, Kupferacetylacetonat, Titantetrabutylat, Alkali-phenolate und Natriumcyanid und durch Phosphorverbindungen wie Trialkylphosphin und Methylphospholinoxid.

Die erfindungsgemäßen Polyamidimide zeichnen sich durch besondere Temperaturbeständigkeit und hohe Abriebfestigkeit aus und sind geeignet als Lacke, Folien und Formkörper. Ihre Eigenschaften können für die verschiedenen Einsatzgebiete durch Änderung der stöchiometrischen Verhältnisse, des Kondensationsgrades und durch Zusatz von Füllstoffen, Pigmenten und neider- und hochmolekularen Komponenten variiert werden.

## Beispiele

Vergleichsbeispiel A:

In 390 g m-Kresol 70 (technisches Kresol-Gemisch) werden 113 g Caprolactam, 192 g Trimellithsäureanhydrid und 174 g eines Gemisches aus 80 Teilen 2,4- und 20 Teilen 2,6-Toluylendiisocyanat eingetragen. Das Gemisch wird im Verlaufe von 4 Stunden unter Rühren auf 200°C erhitzt und 4 Stunden bei dieser Temperatur gehalten. Dann werden unter leichtem Vakuum 260 g des Lösungsmittels abdestilliert. Man erhält eine ca. 75 %ige Schmelze des Imidharzes, die beim Erkalten zu einer spröden Masse erstarrt. Eine Probe des Harzes wird in Kresol gelöst und auf eine Glasplatte aufgestrichen. Nach dem Einbrennen in jeweils 15 Min. bei 200°C und 300°C wird eine spröder Lackfilm erhalten, der beim Ablösen zerbricht.

Vergleichsbeispiel B:

In die Lösung von 113 g Caprolactam in 380 g Kresol werden unter Kühlung anteilsweise 250 g 4,4'-Diisocyanatodiphenylmethan und 192 g Trimellithsäureanhydrid eingetragen. Die Temperatur wird nun gesteigert und das Gemisch 4 Stunden bei 190°C und 4 Stunden bei 205°C gerührt. Die Kondensation erfolgt unter Abspaltung von Kohlendioxid. Anschließend werden unter Vakuum 260 g des Lösungsmittel abdestilliert. Das Reaktionsprodukt erstarrt nach dem Ausgießen beim Abkühlen zu einem spröden Harz mit einem Festgehalt von ca. 80 Gew.-%.

Temperversuche: Das 80 %ige Imid-Harz wird nach 10 Min. bei 135°C und nach 80 Min. bei 200°C trübe und geht in eine feste, schwerlösliche und technisch nicht mehr zu handhabende Masse über.

250 g des so hergestellten Harzes werden in 500 g Phenol/Kresol (1:1) gelöst und in einem Vertikalofen von 4 m Länge bei einer Ofentemperatur von 400°C auf einen Cu-Draht von 0,7 mm Durchmesser bis zu einer Durchmesserzunahme von 40—50 µm appliziert. Bei einer Lackiergeschwindigkeit von 7 m/Min. beträgt die maximale Außenfaserdehnung 88%, der Hitzeschock 260°C, die Erweichungstemperatur 325°C (DIN 46 453—10.2) und die Schabefähigkeit 120 Hübe.

Vergleichsbeispiel C:

In 210 g Kresol werden 33,9 Nylon 6 (Polycapronamid) gelöst. Dann werden 125 g 4,4'-Diisocyanatodiphenylmethan und 96 g Trimellithsäureanhydrid eingetragen. Das Gemisch wird im Verlaufe von 5 Stunden aus 205°C erhitzt und dann noch 4 Stunden bei dieser Temperatur gehalten. Anschließend werden 140 g des Lösungsmittels abdestilliert. Man erhält beim Abkühlen ein klares braunes Harz mit einem Festgehalt von 75 Gew.-% und einer Viskosität $\eta^{25}$, gemessen an einer 15 %igen Lösung des Polyamidimids in Kresol, von 230 mPas.

Bei der Temperung wird das Harz sowohl bei 135°C als auch bei 200°C innerhalb einer Stunde trübe. Eine Probe des Harzes wird als 15 %ige Lösung in Kresol auf ein Prüfblech aufgestrichen und in jeweils 15 Min. bei 200 und 300°C zu einem klaren elastischen Lackfilm eingebrannt.

Beispiel 1

In 375 g Phenol/Kresol (1:1) werden 113 g Caprolactam, 225 g 4,4'-Diisocyanato-diphenylmethan, 17,4 g eines technischen Gemisches aus 80 Teilen 2,4- und 20 Teilen 2,6-Toluylendiisocyanat und 192 g Trimellitsäureanhydrid 2 Stunden bei 170°C, 2 Stunden bei 190°C und 4 Stunden bei 205°C gerührt. Dann werden 260 g des Lösungsmittels abdestilliert und noch eine Stunde bei 210°C nachgerführt. Man erhält das Polyamidimid beim Erkalten als klares braunes Harz mit einem Feststoffgehalt von ca. 80 Gew.-%. Die Viskosität $\eta^{25}$ einer 15 %igen Lösung in Phenol/Kresol beträgt 660 mPas.

Temperversuche: Das Harz zeigt erst nach 9,5 Stunden bei 135°C eine leichte Trübung und ist nach 25 Stunden bei 200°C noch klar.

Eine 27 %ige Lösung des Polyamidimid-Harzes in Phenol/Kresol (1:1) wird entsprechend Beispiel B auf einen Cu-Draht von 0,7 mm Durchmesser appliziert. Man erhält einen Lackdraht mit einer max. Außenfaserdehnung von 88%, einem Hitzeschock von 260°C, einer Erweichungstemperatur von 328°C und einer Schabefestigkeit von 115 Hüben.

Beispiel 2

192 g Trimellitsäureanhydrid, 124 g Capronlactam, 175 g 4,4'-Diisocyanato-diphenylmethan und 52 g 2,4-Toluylendiisocyanat werden in 450 g Kresol eingetragen und 2 Stunden bei 170°C, 2 Stunden bei 190°C und 4 Stunden bei 205°C gerührt. Dann werden unter Vakuum 300 g des Lösungsmittels abdestilliert und der Rückstand noch eine Stunde auf 215°C erhitzt. Man erhält beim Erkalten ein klares braunes Harz mit einem Festgehalt von ca. 75 Gew.-%. Die Viskosität $\eta^{25}$ einer 15 %igen Lösung in Kresol beträgt 600 mPas. Das Harz bleibt nach 20 Stunden bei 135°C und nach 20 Stunden bei 200°C klar.

Man stellt eine Lacklösung her, indem man Harz in Kresol/Phenol (1:1) zu einem Festgehalt von 25 Gew.-% gelöst wird. Ein entsprechend Beispiel B lackierter Cu-Draht von 0,7 mm Durchmesser hat bei einer Lackierungsgeschwindigkeit von 7 m/Min. eine maximale Außenfaserdehnung von 88%, einem Hitzeschock von 260°C, eine Erweichungstemperatur von 330°C und eine Schabefestigkeit von 87 Hüben.

Beispiel 3

In 200 g Kresol werden 33,9 g Nylon 6 (Polycapronamid) gelöst, dann werden 17,4 g eines Gemisches aus 80% 2,4- und 20% 2,6-Toluylendiisocyanat, 100 g 4,4'-Diisocyanatodiphenylmethan und 96 g Trimellitsäureanhydrid eingetragen. Die Temperatur wird innenhalb von 5 Stunden unter Rühren auf 205°C gesteigert und noch 4 Stunden in diesem Bereich gehalten. Danach wurden 130 g des Lösungsmittels abdestilliert. Das Reaktionsprodukt erstarrt beim Erkalten zu einem spröden braunen Harz mit einem Festegehalt von ca. 75 Gew.-%. Die Viskosität $\eta^{25}$ einer 15 %igen Lösung in Kresol beträgt 260 mPas. Bei der Temperung bleibt das Harz sowohl bei 135°C als auch bei 200°C länger als 15 Stunden klar. Eine 15 %ige Lösung des Harzes in Kresol wird auf einem Prüfblech in jeweils 15 Min. bei 200 und 300°C zu einem klaren elastischen Lackfilm eingebrannt.

Beispiel 4

In 3150 g Phenol/Kresol (1:1) werden 1017 g Caprolactam und dann bei 120°C 1125 g 4,4'-Diisocyanatodiphenylmethan, 783 g 2,4-Toluylendiisocyanat und 1728 g Trimellitsäureanhydrid eingetragen. Die Kondensation wird in 4 Stunden bei 190°C und 4 Stunden bei 205°C ausgeführt. Dann werden unter

Vakuum 1860 g des Lösungsmittelgemisches abdestilliert. Anschließend wird noch eine Stunde bei 215°C nachgerührt. Man erhält das Polyamidimid als klare braune Schmelze, die beim Erkalten zu einem spröden Harz mit einem Festgehalt von ca. 75 Gew.-% erstarrt. Die Viskosität $\eta^{25}$ einer 15 %igen Lösung in Kresol beträgt 400 mPas. Das Harz zeigt nach 20 Stunden bei 135°C und 20 Stunden bei 200°C noch keine Trübung.

Eine 25 %ige Lösung des Harzes in Kresol wird auf eine Glasplatte aufgestrichen und in jeweils 15 Min. bei 200 und 300°C zu einem klaren elastischen Lackfilm eingebrannt.

**Patentansprüche**

1. Polyamidimide, hergestellt durch Umsetzung von Trimellitsäureanhydrid, Lactamen oder aliphatischen Polyamiden mit Isocyanaten, dadurch gekennzeichnet, daß als Isocyanate Gemische aus 98—40 Gew.-% 4,4'-Diisocyanato-diphenylmethan und 2—60 Gew.-% 2,4- oder 2,6-Toluylendiisocyanate oder deren Gemische verwendet werden.

2. Verfahren zur Herstellung von Polyamidimiden nach Anspruch 1, dadurch gekennzeichnet, daß die Komponenten gegebenenfalls in einem Lösungsmittel bei einer Temperatur von 0 bis 400°C, gegebenenfalls in Anwesenheit eines Katalysators, umgesetzt werden.

3. Verwendung der Polyamidimide nach Anspruch 1 als Überzüge und Duroplaste.

**Revendications**

1. Polyamide-imides, préparés par réaction d'anhydride d'acide trimellitique, de lactames ou de polyamides aliphatiques avec des isocyanates, caractérisés en ce qu'on utilise comme isocyanates des mélanges de 98 à 40% en poids de 4,4'-diisocyanatodiphénylméthane et 2 à 60% en poids de 2,4- ou de 2,6-diisocyanatotoluène ou leurs mélanges.

2. Procédé de production de polyamide-imides suivant la revendication 1, caractérisé en ce qu'on fait réagir les composants, le cas échéant dans un solvant à une température de 0 à 400°C, éventuellement en présence d'un catalyseur.

3. Utilisation des polyamide-imides suivant la revendication 1 comme revêtements et comme duroplastes.

**Claims**

1. Polyamide imides produced by reaction of trimellitic anhydride, lactams or aliphatic polyamides with isocyanates, characterized in that mixtures of 98 to 40% by weight 4,4'-diisocyanatodiphenyl methane and 2 to 60% by weight 2,4- or 2,6-tolylene diisocyanates or mixtures thereof are used as the isocyanates.

2. A process for the production of the polyamide imides claimed in claim 1, characterized in that the components are reacted, optionally in a solvent, at a temperature of 0 to 400°C, optionally in the presence of a catalyst.

3. The use of the polyamide imides claimed in claim 1 as coatings and thermosets.